(19)

Europäisches Patentamt

European Patent Office

Office européen des brevets

(11) **EP 1 932 948 A1**

(12) **EUROPEAN PATENT APPLICATION**

(43) Date of publication:
   **18.06.2008 Bulletin 2008/25**

(51) Int Cl.:
   **C23F 1/46** *(2006.01)*   **C23G 1/36** *(2006.01)*
   **C01D 1/32** *(2006.01)*   **C01F 7/14** *(2006.01)*

(21) Application number: **07122525.4**

(22) Date of filing: **06.12.2007**

(84) Designated Contracting States:
   **AT BE BG CH CY CZ DE DK EE ES FI FR GB GR HU IE IS IT LI LT LU LV MC MT NL PL PT RO SE SI SK TR**
   Designated Extension States:
   **AL BA HR MK RS**

(30) Priority: **07.12.2006 IT MO20060401**

(71) Applicant: **ITALTECNO S.R.L.**
   **41100 Modena MO (IT)**

(72) Inventors:
   • **Dalla Barba, Walter**
     **41100 MODENA (IT)**

• **Rossi, Marcello**
   **41023 LAMA MOCOGNO (MO) (IT)**
• **Vincenzi, Fabio**
   **41057 SPILAMBERTO (MO) (IT)**
• **Vincenzi, Federico**
   **41100 MODENA (IT)**
• **Garuti, Giuseppe**
   **41100 MODENA (IT)**

(74) Representative: **Modiano, Micaela Nadia**
   **Modiano Gardi Patents SAS**
   **Via Meravigli 16**
   **20123 Milano (IT)**

(54) **Apparatus and method for recovering caustic soda from caustic solutions**

(57)   An apparatus (1) for recovering caustic soda from caustic solutions from a bath which is the result of the pickling/satinizing of substantially metallic articles, in which there is aluminum, by immersion in caustic soda arranged in a containment tank (2), comprising:

- means (3) for drawing the bath from the containment tank (2),
- at least one decantation tank (4) of the bath, for the at least partial separation of aluminum from the bath and for reducing the aluminum content of the bath, the decantation tank (4) being associated in input with the drawing means (3),
- means (6) for introducing a crystalline germ for activation of the precipitation of aluminum-based compounds, the introduction means (6) being associated with the decantation tank (4); and
- means for introducing water which are associated with the decantation tank (4).

Fig. 1

EP 1 932 948 A1

**Description**

The present invention relates to an apparatus for recovering caustic soda from solutions for processes for working aluminum, particularly from a bath which is the result of the pickling of substantially metallic articles in which there is aluminum, by immersion in caustic soda, and to the associated method.

In particular, the invention relates to an apparatus for recovering caustic soda used in the treatment of solutions originating from the process for cleaning extrusion dies or other working tools made of steel, used in particular in the aluminum working process, as well as in the treatment of caustic soda solutions used in the process for pretreatment of aluminum articles for anodizing.

It is known that aluminum is extensively worked by plastic deformation, in particular by extrusion to obtain semifinished profiled elements which have variously shaped transverse cross-sections, depending on the shape imparted by the extrusion die.

It is also known that these dies must be replaced whenever one wishes to change the type and shape of the extruded element, but their high cost recommends their reuse, requiring the provision, within the production cycle, of a step for cleaning the dies of the aluminum, which remains trapped between the meshes of the dies once it has passed from the plastic state for working to the solid state.

Normally, the treatment for cleaning these dies is performed by immersion in pickling baths with a concentration of free caustic soda on the order of 220-160 g/l, within which the aluminum residues are dissolved in the form of aluminum ions ($Al^{+++}$) with concentrations on the order of 120-160 g/l and temperatures on the order of 90-110°C.

An electrochemical method is also known, as regards the anodizing process, by means of which an accelerated growth of the oxide layer is produced on the surface of a metal and is obtained by rendering the metal anodic within electrolytes, i.e., electricity-conducting liquids, which are constituted generally by diluted solutions of sulfuric acid.

As regards the baths of alkaline solutions that originate from anodizing lines, the waste liquid has a composition which is entirely similar to the composition originating from the process for cleaning the dies: as regards the concentrations involved, they are on the order of 110-115 g/l of free caustic soda and 120-130 g/l of aluminum ions.

Currently, the bath for pickling the extrusion dies and the pickling/satinizing solutions that originate from the treatments performed on anodizing lines, saturated with aluminum, must be disposed of; they are in fact collected within reservoirs and transferred to specialized companies which deal with the associated disposal.

This known operating method is not free from drawbacks, which include the fact that it entails high costs for the companies in the field, which must bear the expense for the purchase of such volumes of caustic soda solutions to renew the caustic solution baths periodically and the burdens related to the disposal of the saturated baths, which can vary depending on the number and extent of the disposal transfers.

The aim of the present invention is to eliminate the above mentioned drawbacks of the background art, by providing an apparatus for recovering caustic soda from caustic solutions which allows to recover the caustic soda used in the process for pickling the extrusion dies of aluminum products and in the process for the pickling/satinizing of aluminum of anodizing systems, with a yield of 80% or more.

Within this aim, an object of the invention is to reduce the costs for the purchase and disposal of caustic soda.

Another object is to provide a closed cycle and therefore to extend the effectiveness of the alkaline bath being used, significantly reducing the operating costs of the apparatus.

Another object is to promote the pickling/satinizing of aluminum products by means of an apparatus which is simple and easy to adapt to the apparatuses in use for pickling or satinizing in aluminum working cycles.

Another object of the present invention is to provide an apparatus which is simple, relatively easy to provide in practice, safe in use, effective in operation, and has a relatively low cost.

This aim and these objects, as well as others which will become better apparent hereinafter, are achieved by the present apparatus for recovering caustic soda from caustic solutions from a bath which is the result of the pickling/ satinizing of substantially metallic articles, in which there is aluminum, by immersion in caustic soda arranged in a containment tank, characterized in that it comprises:

-   means for drawing said bath from said containment tank,
-   at least one decantation tank of said bath, for the at least partial separation of aluminum from said bath and for reducing the aluminum content of said bath, said decantation tank being associated in input with said drawing means,
-   means for introducing a crystalline germ for activation of the precipitation of aluminum-based compounds, said introduction means being associated with said decantation tank; and
-   means for introducing water which are associated with said decantation tank.

Further characteristics and advantages of the present invention will become better apparent from the following detailed description of a preferred but not exclusive embodiment of an apparatus for recovering caustic soda from caustic solutions, illustrated by way of non-limiting example in the accompanying drawing, wherein the only figure is a diagram which illustrates the apparatus according to the invention.

With reference to the figure, the reference numeral 1 generally designates an apparatus for recovering caustic soda used in the treatment of solutions, particularly in aluminum working processes.

The apparatus 1 can be associated with a tank 2 for containing a pickling/satinizing bath which comprises a solution of caustic soda, preferably diluted by 30% in water for a die pickling bath or alternatively by 5-6% for a bath for pickling/satinizing aluminum worked parts.

The substantially metallic articles that must be cleaned of aluminum residues adhering to their surface or will be subjected to an anodizing process are immersed within the containment tank 2.

In the containment tank 2, the process occurs by which the aluminum dissolves within the bath in the form of aluminum ions and forms compounds with the sodium of the caustic soda, releasing gaseous hydrogen, according to the reaction

$$2Al + 2Na(OH) + 2H_2O \leftrightarrow 2NaAlO_2 + 3H_2$$

Conveniently, the containment tank 2 is provided with means for monitoring some physical parameters which indicate the status of the pickling bath contained therein, such as temperature, density and conductivity, which are not shown because they are of a known type.

According to the invention, the apparatus 1 has means 3 for drawing the bath from the containment tank 2 and a decantation tank 4 for said bath, which is associated in input to the containment tank 2 by way of the drawing means 3 for the at least partial separation of the aluminum from the caustic soda solution and for the reduction of the aluminum content of the bath.

Moreover, the decantation tank 4 comprises means 5 for removal from the decantation tank 4 and for the introduction of said bath into the containment tank 2.

The apparatus 1 is further provided with means 6 for introducing a crystalline germ to activate the precipitation of aluminum-based compounds, for example aluminum hydroxide $Al(OH)_3$, associated with the decantation tank 4.

The formation of these compounds and their subsequent precipitation do not occur spontaneously within the bath due to the high concentration of caustic soda and the presence of additives, for example mixtures of organic and inorganic substances which are preferably based on gluconate.

These additives (complexing agents) are in fact introduced upstream of the process indeed to prevent the spontaneous precipitation of aluminum hydroxide within the containment tank 2.

The addition of the crystalline germ, i.e., a precipitate of $Al(OH)_3$, which has formed locally or has been introduced, allows to activate this precipitation process and to contain its duration, so as to make it industrially feasible and convenient from an economic standpoint.

The process for forming said compounds and their subsequent precipitation can in fact generally be performed in a time interval on the order of 48-72 hours, and follows the following reaction, according to which:

$$NaAlO_2 + 2H_2O \leftrightarrow Al(OH)_3 + Na(OH)$$

Within the containment tank 2, the bath is kept at a temperature on the order of 90-110°C as regards the pickling process, while the operating temperature as regards the satinizing process is on the order of 55-75°C and in both cases the operating pressure is ambient pressure.

In these conditions, evaporation of the water in solution in the containment tank 2 occurs, and this phenomenon is monitored, for example by volumetric analyses performed upstream and downstream of the apparatus 1.

Inside the decantation tank 4, instead, the temperature is kept substantially constant around 35°C, and in particular is generally regulated spontaneously by the crystallization reaction parameters within the decantation tank 4.

Advantageously, the process inside the decantation tank 4 is of the continuous type, since the flow-rates of bath requiring recovery in input and recovered in output are of the same order of magnitude; in this manner, the concentration of aluminum within the pickling bath in the containment tank 2 is kept at values on the order of 120-130 g/l, while within the satinizing/pickling bath on the oxidation lines it is kept at values on the order of 120-160 g/l.

The decantation tank 4 is provided in a lower region with a discharge opening 4a, which is used for cleaning and maintenance interventions.

The aluminum compounds precipitated on the bottom of the decantation tank 4 can optionally be evacuated through the discharge opening 4a.

The introduction means 6 comprise an assembly for injecting carbon dioxide into the bath in order to form the crystalline germ; in particular, the introduction of carbon dioxide within said bath causes an acidification process thereof such that the bath has the optimum pH conditions for the sodium aluminate compound ($NaAlO_2$) in water to cause precipitation of the aluminum hydroxide, according to the reaction

$$NaAlO_2 + 2H_2O \leftrightarrow Al(OH)_3 + Na(OH).$$

The carbon dioxide is fed in gaseous form, preferably at a pressure on the order of 50-200 bars and at a temperature approximately equal to ambient temperature, with a flow-rate of 5-10 l/min.

The injection assembly, not shown in the figures because it is of a conventional type, can be associated directly with the decantation tank 4.

In the embodiment shown, the introduction means 6 comprise a reaction chamber 7, which is associated in input to the containment tank 2 to feed the bath and in output to the decantation tank 4 to feed the crystalline germ formed within said chamber; the injection assembly cooperates with the reaction chamber 7.

The decantation tank 4 and the reaction chamber 7 are provided with respective means 8 for monitoring physical values related to the status of the pickling tank contained therein, such as temperature, level controls, density, conductivity and transparency.

In particular, monitoring the conductivity of the liquid provides an indirect measurement of the precipitation of the aluminum: an increase in conductivity corresponds to an increase in precipitation and vice versa.

The monitoring means 8 can be constituted for example by suitable probes for detecting the physical values of interest.

The reaction chamber 7 is kept at a constant temperature of approximately 80°C, so as to optimize the process for forming the crystalline germ.

The drawing means 3 comprise a first duct 9 in output from the containment tank 2, which is connected to the decantation tank 4 and is connected to a shunt 10 for feeding the reaction chamber 7.

Advantageously, the decantation tank 4 is shaped so as to facilitate settling on the bottom of the precipitate and the surface outflow of the fluid with a reduced aluminum content.

The decantation tank 4 in fact has a bottom which tapers and is adapted to accommodate the precipitate; further, the end of the first duct 9 which is connected to the decantation tank 4 has a diffusion end, not shown in the figure, which is adapted to optimize the process for separating the components of the caustic electrolytic solution.

Further, the drawing means 3 provide for a branch 11 for return from the decantation tank 4 to the containment tank 2 in order to empty said decantation tank if it fills excessively.

The drawing means 3 are associated with first flow control valve means 12, which are not described in detail because they are of a conventional type, and first means 13 for pumping the bath from the containment tank 2 toward the decantation tank 4 and the reaction chamber 7.

The introduction means 6 provide for a second duct 14, which is controlled by second flow control valve means 15 which are arranged upstream and downstream of second pumping means 16 associated with the second duct 14.

The second duct 14 draws the crystalline germ that has formed inside the reaction chamber 7 and feeds it inside the decantation tank 4, for example with a flow-rate of 16.67 l/min.

The second duct 14 draws the crystalline germ proximate to the bottom of the reaction chamber 7.

The reaction chamber 7 is provided in a lower region with a discharge port 7a for performing cleaning and maintenance interventions thereon.

The withdrawal means 5 comprise a spillway 17, which is associated with the top of the decantation tank 4 for the outflow of the bath with a reduced aluminum content proximate to the free surface of said tank.

The spillway 17 is connected to the containment tank 2 by means of a third duct 18.

The apparatus 1 comprises means 19 for extracting the aluminum compounds that have precipitated onto the bottom of the decantation tank 4, together with a residual portion of bath, which are constituted by a fourth duct 20 which is controlled by third valve means 21 for flow control, which are arranged upstream and downstream of third pumping means 22 associated with said duct.

Conveniently, downstream of the extraction means 19 there are means 23 for separating the aluminum compounds extracted from said portion of bath.

The separation means 23 comprise a centrifugal separator 24, which collects the compounds that have precipitated and have been separated from the residual fraction of the bath, which is instead collected in an accumulation reservoir 25.

Further, the apparatus 1 comprises means 26 for feeding the bath from the reservoir 25 to the decantation tank 4, which are constituted by a fifth duct 27, which is controlled by fourth valve means 28 for flow control which are arranged upstream and downstream of fourth pumping means 29 which are associated with said fourth duct.

An alternative embodiment provides for example for the use of three decantation tanks 4 in parallel, which are filled sequentially 24 hours apart, so that for each 72-hour working cycle there is a decantation tank 4 available for filling.

Moreover, it is noted that the aluminum compounds thus obtained can be treated for example with sulfuric acid to obtain aluminum sulfate, which is widely used for example in the ceramics sector.

Further, the bath, once it has been partially deprived of the aluminum dissolved therein, becomes available again for a new pickling/satinizing process.

A numeric example of the concentrations involved for the process for recovering the caustic solution respectively from a bath which is the result of the pickling of dies and a bath which is the result of the satinizing of extruded elements is provided hereafter by way of non-limiting example.

For a bath which is a result of the pickling of metallic articles in which the total caustic soda solution, i.e., the free caustic soda added to the caustic soda bound to the aluminum, has a concentration of approximately 200 g/l, the solution in input to the decantation tank 4 has a free caustic soda concentration of approximately 80 g/l and an aluminum concentration of approximately 85 g/l.

At the end of the method for recovering the caustic solution taken as an example, the free soda concentration is approximately 130 g/l and the aluminum concentration is approximately 48 g/l.

As regards a bath which is the result of the aluminum anodizing line, in which for example the total caustic soda solution has a concentration of approximately 220 g/l, the solution in input to the decantation tank 4 has a free caustic soda concentration of approximately 80 g/l and an aluminum concentration of approximately 95 g/l, as well as a concentration of additive (complexing agent) of approximately 20 g/l (understood as a formulation which also comprises the complexing agent).

At the end of the method for recovering the caustic solution taken as an example, the free soda concentration is approximately 135 g/l and the aluminum concentration is approximately 60 g/l, while the additive maintains a concentration of approximately 20 g/l (approximating to zero the entrainments caused by washes).

The recovery method performed by the apparatus 1 consists substantially in collecting a pickling/satinizing bath which comprises a solution of caustic soda and has aluminum compounds solubilized therein, in diluting with water said bath within the decantation tank 4, in introducing within said bath a crystalline germ to activate the precipitation of aluminum-based compounds and reduce the aluminum content in said bath, and in separating said bath from said recovery compounds.

Advantageously, the introduction of said crystalline germ in the decantation tank 4 is such that the ratio between the concentration of caustic soda and aluminum ions in solution in said bath is less than 1 or at the most equal to 1.

This ratio allows the activation of the precipitation of aluminum-based compounds on the bottom of the decantation tank 4.

In the present embodiment, the dilution water is taken from input means which have a sixth duct 30 provided with fifth valve means 31 and fifth means 32 for pumping from a containment tank 2a, which in particular can contain alternately water or a caustic electrolytic solution characterized by a reduced concentration of caustic soda and aluminum.

Advantageously, moreover, the amount of dilution water to be returned to the decantation tank 4 is generally assumed equal to the amount of water lost in the process for collecting the caustic electrolytic solution in the containment tank 2.

In particular, water losses due to water evaporation are considered, and it is assumed therefore that the amount of water for dilution varies depending on whether one is dealing with a pickling bath, and therefore the temperatures in the containment tank 2 are on the order of 90-110°C, or a pickling/satinizing bath, with temperatures involved on the order of 55-75°C and therefore less evaporation water.

Finally, the apparatus 1 is provided with a unit for the management and control of the valve means 12, 15, 21, 28 and 31 and of the pumping means 13, 16, 22, 29 and 32, which is functionally associated with the monitoring means.

Advantageously, the use of said unit, which is not visible in the figure, allows continuous and automatic operation of the recirculation of the bath within the apparatus 1.

In practice it has been found that the described invention achieves the proposed aim and objects, and in particular the aim of allowing the recovery of the caustic soda used in the process for pickling the extrusion dies of aluminum products and in the process for pickling/satinizing from oxidizing apparatuses, with a yield of more than 80%. Further, the invention as conceived allows to reduce caustic soda purchase and disposal costs and to extend the effectiveness of the bath being used, significantly reducing the operating costs of said apparatus.

Further, the apparatus according to the invention is simple and easy to adapt to existing pickling/satinizing apparatuses in cycles for working aluminum.

The invention thus conceived is susceptible of numerous modifications and variations, all of which are within the scope of the appended claims.

All the details may further be replaced with other technically equivalent ones.

In practice, the materials used, as well as the shapes and dimensions, may be any according to requirements without thereby abandoning the scope of the protection of the appended claims.

The disclosures in Italian Patent Application No. MO2006A000401, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

**Claims**

1. An apparatus for recovering caustic soda from caustic solutions from a bath which is the result of the pickling/ satinizing of substantially metallic articles, in which there is aluminum, by immersion in caustic soda arranged in a containment tank, **characterized in that** it comprises:

   - means for drawing said bath from said containment tank,
   - at least one decantation tank of said bath, for the at least partial separation of aluminum from said bath and for reducing the aluminum content of said bath, said decantation tank being associated in input with said drawing means,
   - means for introducing a crystalline germ for activation of the precipitation of aluminum-based compounds, said introduction means being associated with said decantation tank; and
   - means for introducing water which are associated with said decantation tank.

2. The apparatus according to claim 1, **characterized in that** said introduction means comprise an assembly for injecting carbon dioxide into said bath in order to form said crystalline germ.

3. The apparatus according to one or more of the preceding claims, **characterized in that** said injection means are associated with said decantation tank.

4. The apparatus according to one or more of the preceding claims, **characterized in that** said introduction means comprise a reaction chamber, which is associated in input to said containment tank in order to feed said bath and in output to said decantation tank to feed said crystalline germ, the injection means cooperating with the reaction chamber.

5. The apparatus according to one or more of the preceding claims, **characterized in that** said crystalline germ is introduced into said decantation tank with a flow-rate of approximately 16.67 l/min.

6. The apparatus according to one or more of the preceding claims, **characterized in that** said reaction chamber is associated with said containment tank by means of said drawing means.

7. The apparatus according to one or more of the preceding claims, **characterized in that** said carbon dioxide is fed substantially at ambient temperature.

8. The apparatus according to one or more of the preceding claims, **characterized in that** said carbon dioxide is fed at a pressure comprised between 50 and 200 bars.

9. The apparatus according to one or more of the preceding claims, **characterized in that** said carbon dioxide is fed at a flow-rate comprised between 5 and 10 l/min.

10. The apparatus according to one or more of the preceding claims, **characterized in that** said carbon dioxide is in gaseous form.

11. The apparatus according to one or more of the preceding claims, **characterized in that** it comprises withdrawal means, which consist of a spillway which is associated with said decantation tank for the outflow of said bath proximate to the free surface of said tank.

12. The apparatus according to one or more of the preceding claims, **characterized in that** said pickling bath is kept within said decantation tank at a temperature range comprised between 90 and 110°C.

13. The apparatus according to one or more of the preceding claims, **characterized in that** said pickling bath is kept within said decantation tank at an ambient pressure.

14. The apparatus according to one or more of claims 1 to 11, **characterized in that** said pickling/satinizing bath is kept within said decantation tank at a temperature range comprised between 55 and 75°C.

15. The apparatus according to one or more of claims 1 to 11 and 14, **characterized in that** said pickling/satinizing bath is kept within said decantation tank at an ambient pressure.

16. The apparatus according to one or more of the preceding claims, **characterized in that** it comprises means for extracting at least said aluminum compounds from the lower portion of said decantation tank.

17. The apparatus according to one or more of the preceding claims, **characterized in that** it comprises means for extracting at least said caustic soda from the upper portion of said decantation tank.

18. The apparatus according to one or more of the preceding claims, **characterized in that** it comprises means for separating said compounds of aluminum and/or caustic soda extracted from a residual portion of said bath and associated with said extraction means.

19. The apparatus according to one or more of the preceding claims, **characterized in that** said separation means comprise a centrifugal separator.

20. The apparatus according to one or more of the preceding claims, **characterized in that** said separation means comprise a reservoir for accumulating the residual portion of said bath.

21. The apparatus according to one or more of the preceding claims, **characterized in that** it comprises means for feeding the residual portion of said bath collected within said tank into said decantation tank.

22. The apparatus according to one or more of the preceding claims, **characterized in that** said drawing means comprise a branch for return from said decantation tank toward said containment tank.

23. The apparatus according to one or more of the preceding claims, **characterized in that** the process within said decantation tank is substantially continuous, the flow-rates of said bath in input and in output respectively by way of said drawing means and said withdrawal means being substantially of the same order of magnitude.

24. The apparatus according to one or more of the preceding claims, **characterized in that** it comprises valve means for flow control which are associated with at least one among said drawing means, said introduction means, said separation means and said delivery means.

25. The apparatus according to one or more of the preceding claims, **characterized in that** it comprises pumping means which are associated with at least one among said drawing means, said introduction means, said separation means and said delivery means.

26. The apparatus according to one or more of the preceding claims, **characterized in that** it comprises means for monitoring at least one physical value of said bath within at least one among said containment tank, said reaction chamber and said decantation tank.

27. The apparatus according to one or more of the preceding claims, **characterized in that** said physical value is chosen within the group that comprises temperature, density, conductivity and transparency of said bath.

28. The apparatus according to one or more of the preceding claims, **characterized in that** it comprises a unit for the management and control of said valve means and of said pumping means which is functionally associated with said monitoring means.

29. A method for recovering caustic soda from caustic solutions, **characterized in that** it comprises the steps of:

   a) collecting a pickling/satinizing bath which comprises a solution of caustic soda and has aluminum compounds solubilized therein;
   b) diluting said bath with water, thus forming aluminum-based compounds which can precipitate and caustic soda;

c) introducing in said bath a crystalline germ to activate the precipitation of said aluminum-based compounds which can precipitate and to reduce the aluminum content within said bath;

d) separating said bath from said precipitated aluminum-based compounds.

**30.** The method according to claim 29, **characterized in that** said crystalline germ is obtained by injecting carbon dioxide into said bath.

**31.** The method according to claim 29, **characterized in that** the introduction of said crystalline germ is such that in said bath the ratio between the concentration of caustic soda and of the aluminum ions in solution is lower than 1 or at the most equal to 1.

**32.** The method according to claim 29, **characterized in that** it comprises the step of:

e) diluting said bath with caustic electrolytic solution to be recovered.

**33.** The method according to claims 29 and 32, **characterized in that** said steps c) and e) comprise an amount of dilution water which is equal to the water that evaporates during step a).

**34.** The method according to claim 29, **characterized in that** it comprises the step of:

f) monitoring one or more physical values chosen within the group that comprises temperature, caustic soda and aluminum ion concentration, conductivity and transparency of said bath.

**35.** The method according to one or more of claims 29 to 34, **characterized in that** said bath is kept for a period on the order of magnitude of 48-72 hours.

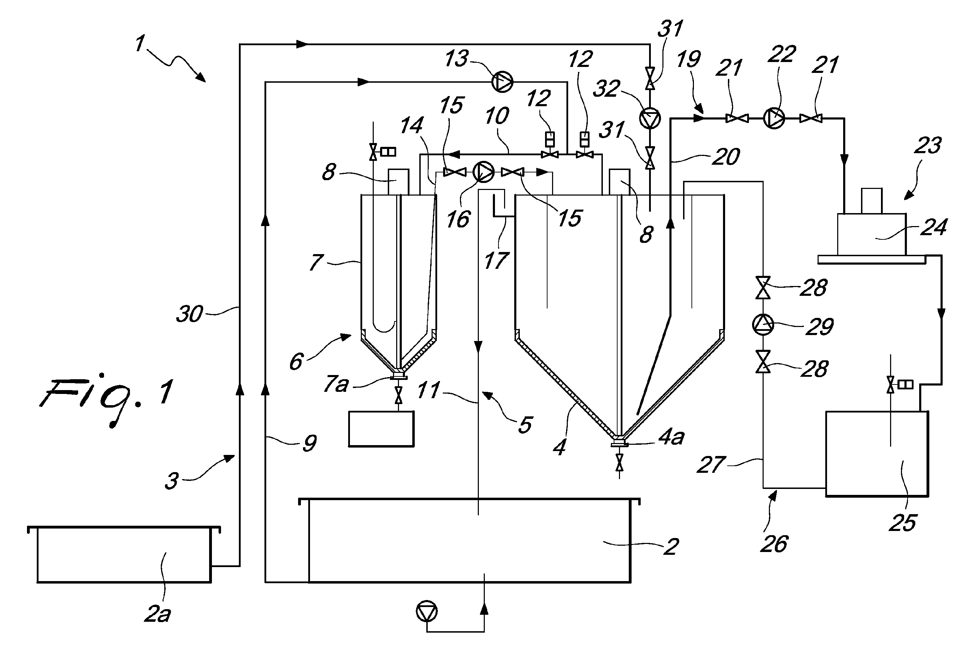

*Fig. 1*

EP 1 932 948 A1

**European Patent Office**

# EUROPEAN SEARCH REPORT

Application Number

EP 07 12 2525

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 197 03 348 A1 (KLEIN KLAUS DIPL ING [DE]) 6 August 1998 (1998-08-06) | 1-4,7, 10,12, 13,16-34 | INV. C23F1/46 C23G1/36 C01D1/32 C01F7/14 |
| Y | * column 1, line 3 - column 3, line 16 * * figures 1,2 * * claims 1-18 * | 5,8,11 | |
| X | US 5 512 129 A (BRODALLA DIETER [DE] ET AL) 30 April 1996 (1996-04-30) * column 1, lines 10-60 * * column 2, line 47 - column 8, line 41 * * column 8, lines 46-56; example 1 * * figure 1 * * claims 1-14 * | 1,6,10, 12-18, 22-29, 31,34,35 | |
| X | EP 0 147 167 A (ALUMINUM CO OF AMERICA [US]) 3 July 1985 (1985-07-03) | 1-4,6,7, 9,10, 12-31, 33,34 | |
| Y | * page 3, line 25 - page 9, line 8 * * figure 6 * * examples I-VIII * * claims 1-6 * | 5,8,11 | TECHNICAL FIELDS SEARCHED (IPC) C23F C23G C01D C01F |
| X | DE 100 09 369 A1 (VAW VER ALUMINIUM WERKE AG [DE]) 30 August 2001 (2001-08-30) * the whole document * | 29,30 | |
| X | EP 0 157 190 B (PLATTNER PROF DR E [CH]; COMNINELLIS CH DR [CH]) 18 July 1990 (1990-07-18) * page 2, lines 3-47 * | 29 | |

-/--

The present search report has been drawn up for all claims

| Place of search | Date of completion of the search | Examiner |
|---|---|---|
| Munich | 13 March 2008 | Handrea-Haller, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**European Patent Office**

**EUROPEAN SEARCH REPORT**

Application Number

EP 07 12 2525

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2005/095674 A (G R TRATTAMENTI TERMICI GRTT S [IT]; RICCIARINI SILVIA [IT]; COLELLA C) 13 October 2005 (2005-10-13) * the whole document * | 29 | |
| X | US 3 607 482 A (SELM ROBERT P) 21 September 1971 (1971-09-21) * the whole document * | 29 | |
| X | EP 0 636 577 A (NITTETSU MINING CO LTD [JP]) 1 February 1995 (1995-02-01) * the whole document * | 29 | |
| X | JP 09 003671 A (NIPPON LIGHT METAL CO) 7 January 1997 (1997-01-07) * the whole document * | 1,29 | |
| Y | EP 1 609 759 A (NISSAN CHEMICAL IND LTD [JP]) 28 December 2005 (2005-12-28) * column 5, paragraph 24 - column 8, paragraph 40 * * column 15 - column 20; examples 1-5 * * claims 1-8 * | 29,30, 33,34 | TECHNICAL FIELDS SEARCHED (IPC) |
| Y | GB 1 143 787 A (REYNOLDS METALS CO) 26 February 1969 (1969-02-26) * page 2, column 2, line 1 - page 6, column 6, line 8 * | 29,30, 33,34 | |

The present search report has been drawn up for all claims

| Place of search | Date of completion of the search | Examiner |
|---|---|---|
| Munich | 13 March 2008 | Handrea-Haller, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
............................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 12 2525

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2008

| Patent document cited in search report | | Publication date | Patent family member(s) | | Publication date |
|---|---|---|---|---|---|
| DE 19703348 | A1 | 06-08-1998 | NONE | | |
| US 5512129 | A | 30-04-1996 | NONE | | |
| EP 0147167 | A | 03-07-1985 | AU | 3606084 A | 27-06-1985 |
| | | | CA | 1207630 A1 | 15-07-1986 |
| | | | JP | 60215521 A | 28-10-1985 |
| DE 10009369 | A1 | 30-08-2001 | AT | 253018 T | 15-11-2003 |
| | | | AU | 4243701 A | 12-09-2001 |
| | | | BR | 0108759 A | 10-12-2002 |
| | | | WO | 0164584 A2 | 07-09-2001 |
| | | | EP | 1259463 A2 | 27-11-2002 |
| | | | ES | 2210138 T3 | 01-07-2004 |
| | | | JP | 2003534218 T | 18-11-2003 |
| | | | NO | 20024078 A | 15-10-2002 |
| | | | US | 2003190281 A1 | 09-10-2003 |
| EP 0157190 | B | 18-07-1990 | EP | 0157190 A1 | 09-10-1985 |
| WO 2005095674 | A | 13-10-2005 | EP | 1730324 A1 | 13-12-2006 |
| US 3607482 | A | 21-09-1971 | NONE | | |
| EP 0636577 | A | 01-02-1995 | AU | 684082 B2 | 04-12-1997 |
| | | | AU | 6878794 A | 09-02-1995 |
| | | | CA | 2129176 A1 | 31-01-1995 |
| | | | CN | 1103383 A | 07-06-1995 |
| | | | DE | 69423272 D1 | 13-04-2000 |
| | | | DE | 69423272 T2 | 13-07-2000 |
| | | | JP | 3161491 B2 | 25-04-2001 |
| | | | JP | 7039884 A | 10-02-1995 |
| | | | US | 5531906 A | 02-07-1996 |
| JP 9003671 | A | 07-01-1997 | NONE | | |
| EP 1609759 | A | 28-12-2005 | CN | 1761618 A | 19-04-2006 |
| | | | WO | 2004080898 A1 | 23-09-2004 |
| | | | KR | 20050109567 A | 21-11-2005 |
| | | | US | 2006128817 A1 | 15-06-2006 |
| GB 1143787 | A | 26-02-1969 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- IT MO20060401 A